## Europäisches Patentamt
## European Patent Office
## Office européen des brevets

(19)

(11) Numéro de publication: **0 102 433**
**A1**

(12) # DEMANDE DE BREVET EUROPEEN

(21) Numéro de dépôt: **82401629.9**

(51) Int. Cl.³: **G 01 N 21/76**

(22) Date de dépôt: **03.09.82**

(43) Date de publication de la demande:
**14.03.84** Bulletin **84/11**

(84) Etats contractants désignés:
**BE CH DE GB IT LI NL SE**

(71) Demandeur: **BIOSYS S.A.**
**21 Quai du Clos des Roses**
**F-60200 Compiegne(FR)**

(72) Inventeur: **Quesneau, Richard Antoine Louis**
**9 square du 8 mai**
**F-60200 Compiegne(FR)**

(72) Inventeur: **Berry, Jean-Luc**
**27 rue des Réservoirs**
**F-60200 Compiegne(FR)**

(74) Mandataire: **Beauchamps, Georges et al,**
**Cabinet Z.Weinstein 20, avenue de Friedland**
**F-75008 Paris(FR)**

(54) **Dispositif de dosage biochimique d'échantillons successifs.**

(57) La présente invention concerne un dispositif automatique de dosage d'échantillons successifs.

Ce dispositif comprend essentiellement un plateau tournant (1) dont la périphérie comporte des logements verticaux (6) contenant un petit tube (7) rempli d'échantillon à doser, un photomultiplicateur (11) disposé en regard de la face latérale (5) du plateau (1) comprenant un orifice tronconique (10) communiquant avec le logement (6), un premier joint plat (25) actionnable par une bague (33) pour venir en contact de la face latérale (5) du plateau, un deuxième joint plat (37) actionnable par une autre bague (39) au-dessus du logement (6) et un troisième joint (41) porté par un berceau mobile (42) en dessous du logement (6).

Ce dispositif s'applique à la mesure en milieu totalement obscur des réactions de luminescence provoquées par un réactif ajouté à l'échantillon à doser.

EP 0 102 433 A1

./...

Fig. 2

0102433

-1-

<u>Dispositif de dosage biochimique d'échantillons suc-
cessifs.</u>

La présente invention a essentiellement pour objet
un dispositif séquentiel automatique de dosage d'échantillons qui se succèdent à cadence élevée et dans
lesquels on provoque une réaction de luminescence à
l'aide d'un réactif approprié.

Il est déjà connu d'injecter dans un échantillon
à mesurer un réactif approprié pour y créer une réaction de luminescence que l'on peut mesurer à l'aide
d'appareils sensibles aux intensités lumineuses relativement faibles, tels que par exemple des photomultiplicateurs, étant bien entendu que le choix de
l'appareil est fonction de l'intensité de la luminescence à mesurer et que le signal enregistré par cet
appareil peut être amplifié et traité par des moyens
appropriés d'analyse électronique.

On sait par ailleurs que les réactions de luminescence, notamment de bioluminescence, sont utilisées
pour doser de très faibles concentrations de composés
réactionnels. Etant donné que la lumière émise est
notamment proportionnelle à la concentration du
composé présent dans l'échantillon et que, d'une
manière générale, les réactions de bioluminescence
produisent des intensités lumineuses très faibles, il

-2-

est essentiel que la partie d'appareil où se déroulent la réaction et la mesure des photons émis, se trouve dans l'obscurité totale, c'est-à-dire à l'abri de toute lumière extérieure parasite, et ce, dès avant le début de la réaction jusqu'au delà de la fin de la mesure.

En outre, les réactions de luminescence se développent en général très rapidement après le mélange des composés réactionnels, de sorte que non seulement ce mélange doit être effectué rapidement en milieu totalement obscur, mais la mesure doit aussi être effectuée en milieu totalement obscur, dès l'émission des premiers photons.

Or, jusqu'à présent, on n'a proposé aucun dispositif combiné injection-mesure séquentiel automatique, dans lequel les échantillons successifs à doser se trouvent en obscurité totale de façon à permettre la mesure instantanée et précise des intensités lumineuses très faibles et de courte durée des réactions de bioluminescence, ce qui, comme on le comprend, est un but difficile à atteindre lorsqu'on veut effectuer la mesure sur des échantillons se succèdant à une cadence élevée.

La présente invention a pour but de combler cette lacune en proposant un nouvel appareillage de dosage d'échantillons successifs grâce auquel l'injection du réactif dans l'échantillon ainsi que la mesure de la réaction de luminescence s'effectuent en obscurité totale, c'est-à-dire sans la présence d'une lumière parasite quelconque, et ce grâce à des moyens d'étanchéité lumineuse spéciaux, de sorte que la mesure demeure d'une grande précision et fidélité dans la reproductibilité des résultats.

A cet effet, l'invention a pour objet un dispositif automatique de dosage d'échantillons successifs
dans lesquels on provoque une réaction de luminescence
à l'aide d'un réactif approprié et qui sont disposés
dans des logements ménagés au voisinage de la périphérie d'un plateau tournant auquel est associé au
moins un système de mesure de luminescence disposé
latéralement en regard de la périphérie de ce plateau,
caractérisé en ce qu'il comprend des moyens assurant
l'étanchéité à la lumière qui sont déplaçables, de
préférence simultanément, et qui sont prévus tant
entre le système de mesure et la périphérie du plateau
que sur la partie supérieure et· inférieure du plateau
au droit du logement contenant l'échantillon à doser.

Suivant un mode de réalisation préféré, les moyens
déplaçables d'étanchéité précités sont constitués
par un premier joint entre système de mesure et périphérie du plateau, actionnable par une bague extérieurement concentrique audit système de mesure, par un
deuxième joint actionnable par une autre bague extérieurement concentrique au système d'injection de
réactif disposé au-dessus de la partie supérieure du
plateau, et par un troisième joint reposant sur un
berceau ou analogue actionnable verticalement en
dessous de la partie inférieure dudit plateau.

On comprend donc déjà que, lorsque l'échantillon porté
par le plateau se trouvera en face du système de
mesure, on pourra effectuer avantageusement une application des trois joints contre le plateau, ce qui
isolera totalement vis-à-vis de la lumière extérieure
l'opération d'injection du réactif et la mesure de la
réaction de luminescence dont la précision ne pourra
être qu'excellente. Puis, pour passer à la mesure de
l'échantillon suivant sur le plateau, il suffira de relâcher mécaniquement les joints, ce qui permettra la rotation du plateau, pour ensuite appliquer à nouveau les joints comme décrit précédemment, en vue d'effectuer la mesure sur l'échantillon suivant.

Suivant une autre caractéristique du dispositif de l'invention, la bague actionnant le premier joint précité est commandée par des barres ou analogues, elles-mêmes commandées par vérin et montées pivotantes sur ladite bague et le bâti de l'appareil, tandis que l'autre bague et le berceau actionnant respectivement les deuxième et troisième joints précités sont respectivement solidaires de traverses disposées au-dessus et au-dessous du plateau.

Les deux traverses précitées appartiennent à un équipage de deux jeux de traverses mobiles actionnés par un seul et même vérin.

Ces deux jeux de traverses sont chacun montés coulissants sur le bâti par l'intermédiaire d'entretoises, le corps du vérin cité en dernier lieu étant solidaire de l'un des jeux de traverses, et la tige dudit vérin étant solidaire de l'autre jeu de traverses.

On ajoutera encore ici que l'un des jeux de traverses, à savoir celui commandant le troisième joint précité, est sollicité vers le bas au moyen de ressorts, tandis que l'autre jeu de traverses, qui commande le deuxième joint précité, est sollicité vers le haut au moyen de ressorts également.

Suivant encore une autre caractéristique de l'invention, les premier et deuxième joints précités sont constitués par des joints plats, le premier joint plat étant solidaire de l'extrémité d'un fourreau ou analogue contenant un photomultiplicateur, et le deuxième joint plat étant solidaire de l'extrémité du système d'injection de réactif, tandis que le troisième joint précité est constitué par une portion de joint torique pouvant être reçue dans une rainure annulaire ménagée dans la partie inférieure du plateau tournant et débouchant dans les logements précités pour l'échantillon.

Selon encore une autre caractéristique de l'invention, la traverse actionnant la bague qui commande le deuxième joint est munie d'un pion de verrouillage du plateau, mobile tandis que la traverse actionnant le troisième joint précité est pourvue d'un orifice d'évacuation des récipients après dosage.

Il faut encore ajouter que le plateau tournant précité est muni d'un rail circulaire de retenue des échantillons, disposé dans la rainure annulaire précitée ménagé dans la partie inférieure dudit plateau.

On notera encore que, sur le bâti de l'appareil, sont notamment fixés un ensemble de distribution de petits récipients tubulaires destinés à contenir l'échantillon à doser, ainsi que des moyens d'alimentation en réactif raccordés au système d'injection précité.

On insistera ici sur le fait que l'utilisation de petits récipients contenant l'échantillon et jetables après le dosage, contribue à la précision du fonctionnement et de la mesure de l'appareil selon l'invention qui est particulièrement compact et permet une manipulation précise et aisée de petites quantités de réactifs, lesquels comme on le sait, sont particulièrement coûteux. C'est dire qu'au total, l'appareillage, objet de l'invention, permet une mesure en obscurité totale, précise, continue et rapide qui n'a jamais pu encore être réalisée avec les appareils actuellement connus.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue schématique de dessus avec arrachements partiels d'un appareil conforme aux principes de l'invention.

La figure 2 est une vue en coupe faite suivant la ligne II-II de la figure 1; et

La figure 3 est une autre vue en coupe faite sensiblement suivant la ligne III-III de la figure 1.

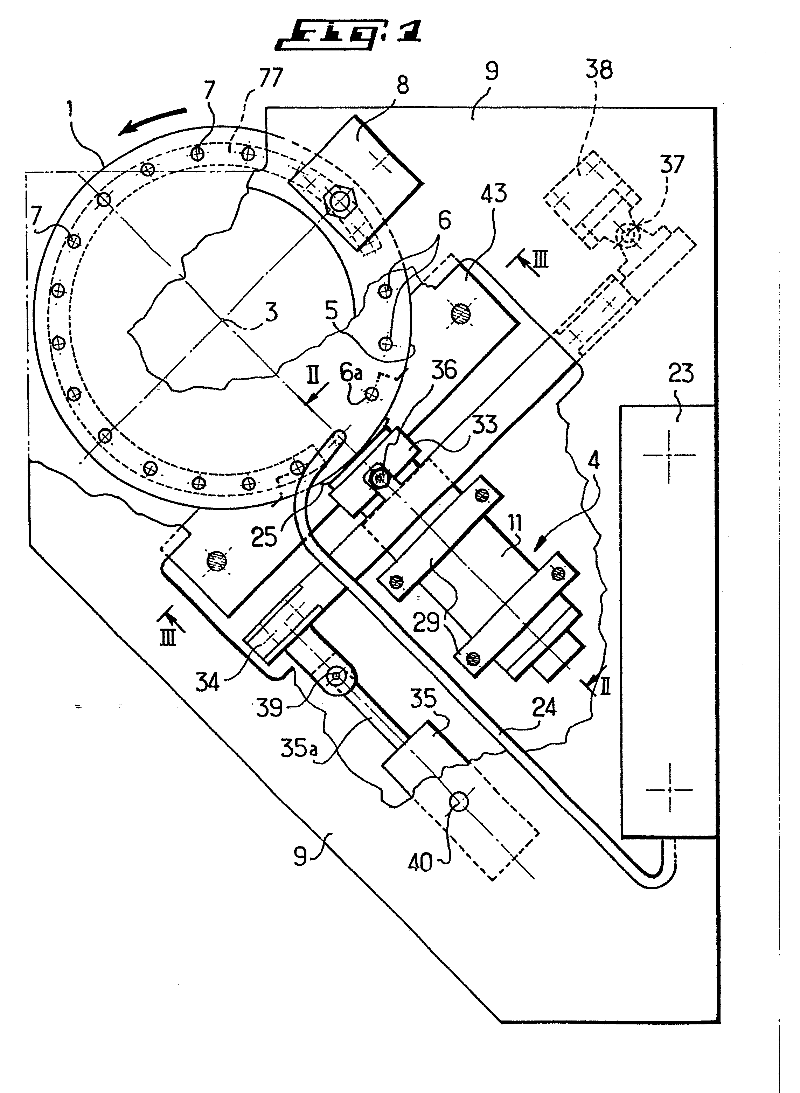

Suivant un exemple de réalisation, et en se reportant aux dessins annexés, un dispositif de mesure conforme à l'invention comprend essentiellement un plateau 1 tournant autour d'un axe 3 et auquel est associé un système de mesure 4 disposé latéralement en regard de la tranche 5 du plateau 1. Ce dernier comporte au voisinage de sa périphérie des logements verticaux régulièrement espacés 6 et parallèles à l'axe 3, lesquels logements sont destinés à recevoir des petits tubes 7 remplis de l'échantillon à analyser. On a montré schématiquement en 8 sur la figure 1 un ensemble distributeur de récipients ou petits tubes 7, lequel ensemble est fixé à la plaque support 9 formant bâti de l'appareil.

Chaque logement vertical 6 du plateau 1 débouche sur la face latérale ou tranche 5 du plateau par l'intermédiaire d'un orifice tronconique 10 évasé vers l'extérieur et coïncidant avec l'axe du système de mesure 4 qui est ici un photomultiplicateur 11, de façon que ledit orifice 10 se situe à proximité de la cathode 11a de celui-ci et enveloppe totalement ladite cathode dans son angle solide.

Chaque logement 6 débouche également en 12 à la partie supérieure 1a du plateau 1, et débouche également à la partie inférieure 1b du plateau 1 par l'intermédiaire d'une rainure annulaire 13 dont la partie supérieure 13a présente la forme d'un demi-tore.

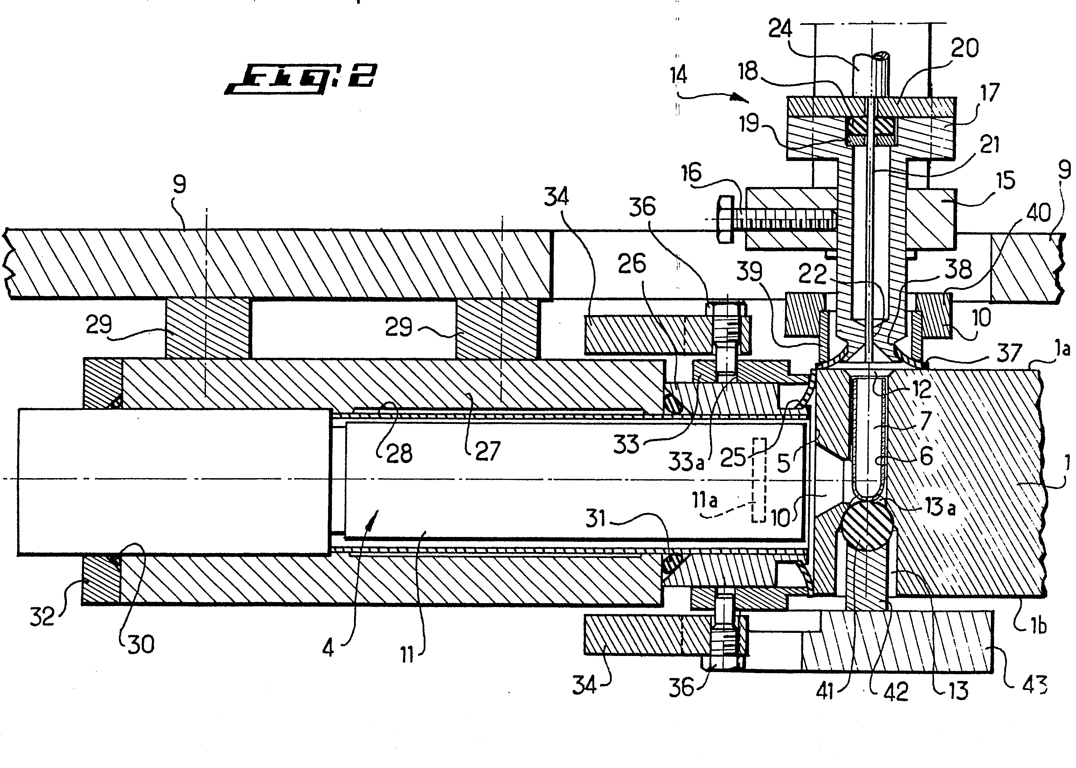

Comme on le voit bien sur la figure 2, un système 14 d'injection de réactif dans le tube 7 contenant l'échantillon, est solidaire du bâti 9 par l'intermédiaire d'un support général 15 et est réglable en hauteur par rapport à celui-ci au moyen d'une vis de blocage 16. Le système 14 surplombe l'orifice 12 de la partie supérieure 1a du plateau 1 et se compose d'un porte-aiguille 17 muni à sa partie supérieure d'un joint 18 monté sur une rondelle d'appui 19 et serré par un couvercle 20. Les éléments 18, 19 et 20 sont percés pour être traversés par une aiguille 21 d'injection de réactif dont la partie inférieure est guidée par une portion rétrécie 22 du porte-aiguille 17. L'aiguille 21 est alimentée en réactif par des moyens d'injection appropriés, tels que par exemple une seringue actionnée par un piston, et montrés schématiquement en 23 sur la figure 1. Ces moyens 23 sont solidaires du bâti 9 et raccordés à l'aiguille 21 par un tube ou analogue 24 déformable et opaque à la lumière, lequel tube est visible sur les trois figures.

On décrira maintenant l'une des caractéristiques essentielles de l'invention qui consiste à prévoir des moyens déplaçables d'étanchéité à la lumière tant entre le photomultiplicateur 11 et la périphérie latérale 5

-8-

du plateau 1 que sur la face supérieure 1a du plateau 1 entre cette face et le système d'injection de réactif 14, et que sur la face inférieure 1a du plateau 1, c'est-à-dire à la partie inférieure du logement 6 des tubes 7. Comme on va le voir, tous ces moyens d'étanchéité permettent avantageusement à la cellule de mesure constituée par l'association du photomultiplicateur 11 avec l'un quelconque des logements 6 de fonctionner en obscurité totale en vue de réaliser la mesure de la réaction de luminescence dans des conditions idéales.

A cet effet, les moyens d'étanchéité en question sont essentiellement constitués par trois joints que l'on décrira en détail maintenant.

Un premier joint plat 25 est prévu entre le photomultiplicateur 11 et la face périphérique 5 du plateau tournant 1. Ce joint plat 25 est solidaire d'un porte-joint 26 qui prolonge un fourreau ou analogue 27 abritant le photomultiplicateur 11. On voit en 28 sur la figure 2 un manchon anti-magnétique interposé entre le fourreau 27 et le photomultiplicateur 11. On notera encore ici que l'ensemble photomultiplicateur est solidaire du bâti 9 par l'intermédiaire d'entretoises 29 et que le photomultiplicateur 11 et son manchon anti-magnétique associé sont maintenus par deux joints toriques 30,31 respectivement serrés par une plaque arrière 32 et le porte-joint 26.

Sur ces porte-joint 26, est montée à coulissement une bague 33 qui peut venir en appui sur le joint plat 25 de façon à le mettre en contact franc avec la face latérale 5 du plateau tournant 1 lorsque celui-ci est à l'arrêt. Cette position appliquée du joint plat 25 est bien visible sur la figure 2, étant entendu que lorsque ledit joint n'est pas sollicité par la
bague 33, il demeure hors de contact avec la face 5
du plateau tournant.

Comme il apparait clairement sur les figures 1 et 2,
la bague 33 est actionnée par des barres ou analogues
34 commandées par un vérin 35 et reliées par des vis
36 à la bague 33. Plus précisément, et comme on le voit
bien sur la figure 1, les barres 34 sont articulées
par l'une de leurs extrémités en 37 sur une partie 38
fixe et solidaire du bâti 9, tandis que l'autre extrémité des barres 34 est articulée en 39 sur la tige
35a du vérin 35 solidaire en 40 du bâti 9. On notera
encore ici que les vis 36 sont de préférence vissées
sur les barres transversales 34 et présentent une
extrémité formant têton qui pénètre librement dans
un logement 33a de la bague 33, ce qui réalise ainsi
une articulation des barres 34 sur ladite bague.

Entre l'extrémité du système à injection de réactif
14 et la surface supérieure 1a du plateau 1, est prévu
un deuxième joint plat 37 monté serrant dans une rainure 38 prévue à ladite extrémité du système d'injection 14. Comme pour le premier joint plat 25, le deuxième joint plat 37 est, au repos, hors de contact
avec la surface supérieure 1a du plateau 1, (figure
3),mais il peut entrer en contact avec ladite surface
grâce à une autre bague d'appui 39, extérieurement
concentrique au porte-aiguille 17. Cette bague est
solidaire d'une traverse 40 dont l'actionnement
vertical permettant à la bague 39 d'appliquer le joint
37 sur la face supérieure 1a du plateau, sera décrit
plus loin.

Un troisième joint est prévu au fond du logement 6.

Ce troisième joint montré en 41 est solidaire d'un porte-joint formant berceau 42 qui est fixé sur une traverse 43, laquelle peut être actionnée verticalement, comme on le décrira plus loin. Ce troisième joint 41 constitue une portion de joint torique dont le profil supérieur présente une forme demi-torique correspondant à la forme demi-torique 13a de la rainure 13. On notera ici qu'en position de repos, le troisième joint 41 n'a aucun contact avec le plateau 1, tandis qu'à l'arrêt du plateau 1, ledit joint prend appui sur la forme demi-torique 13a de la rainure 13, pour ainsi réaliser l'étanchéité à la lumière.

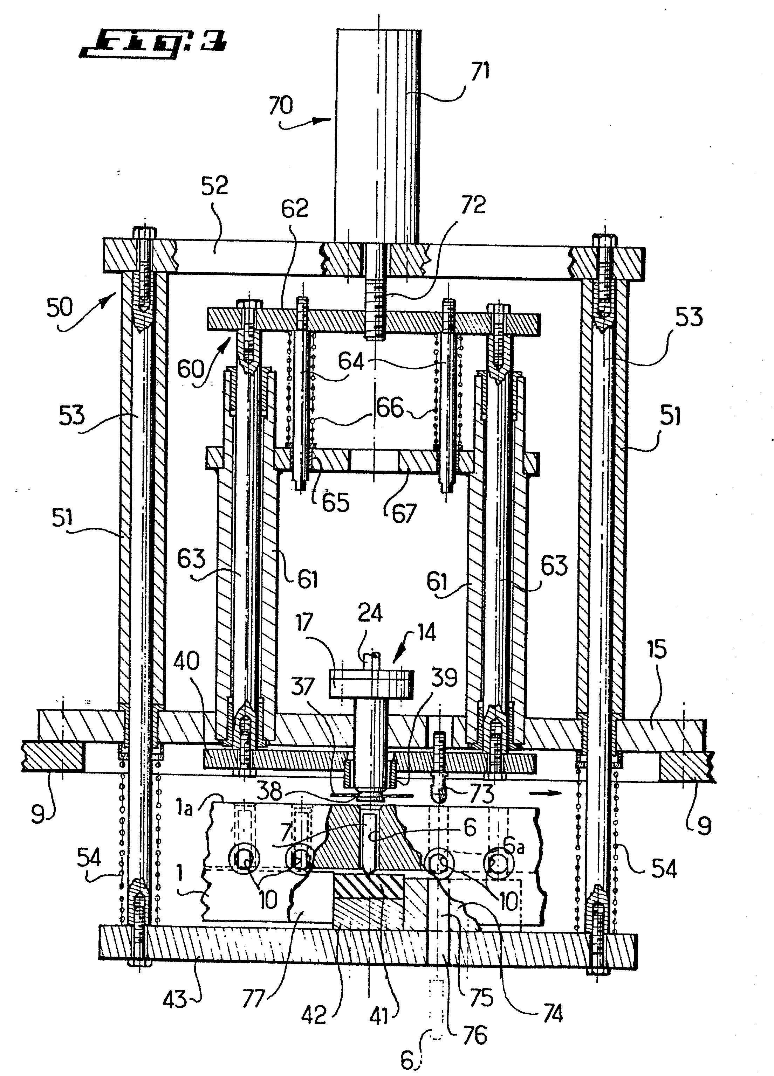

Les traverses 40 et 43 commandant respectivement l'étanchéité à la partie supérieure 1a et inférieure 1b du plateau 1 appartiennent à un équipage mobile représenté sur la figure 3 et comprenant deux jeux 50 et 60 de traverses mobiles actionnées par un seul et même vérin 70, comme on le décrira maintenant en détail.

Chaque jeu 50,60 de traverses mobiles est monté coulissant dans des manchons de guidage 51 et 61 solidaires du support général 15 et donc du bâti 9.

Plus précisément, le jeu de traverses 50 comporte la traverse inférieure 43 et une traverse supérieure 52 attelées par des entretoises 53 coulissant dans les manchons 51.

L'autre jeu 60 de traverses se compose de la traverse inférieure 40 et d'une traverse supérieure 62 attelées par des entretoises 63 coulissant dans les manchons 61. On a montré en 64 des tiges fixées sur la traverse supérieure 62 et coulissant en 65 dans les orifices d'une petite entretoise 67 entre les manchons de guidage 61. Autour de chaque tige 64 est prévu un ressort 66 qui sollicite vers le haut le jeu 60 de traverses 62, 40.

On a également prévu un ressort 54 autour des entretoises 53 entre la traverse inférieure 43 et le support fixe 15, de manière à solliciter constamment vers le bas le jeu 50 de traverses 43,52.

Le corps 71 du vérin vertical 70 est fixé sur la traverse 52, tandis que la tige 72 de ce vérin est fixée sur la traverse 62.

On comprend donc qu'à la position maximum écartée des traverses 40 et 43 sous l'effet des ressorts 66 et 54, correspond une position des joints 37 et 41 qui est normale, c'est-à-dire que lesdits joints ne sont pas appliqués sur le plateau tournant 1, comme on le voit bien sur la figure 3. Par contre, lorsque le vérin 70 est actionné, la tige 72 de ce vérin poussera l'équipage 60 et donc la bague 39 portée par la traverse inférieure 40 contre le joint 37 qui s'appliquera de manière étanche sur la face supérieure 1a du plateau 1, et à ce moment là, par réaction, l'équipage mobile 50 s'élèvera à l'encontre de la force des ressorts 54 pour appliquer le joint demi-torique 41 contre le fond du logement 6 renfermant le tube 7 porte-échantillon. En d'autres termes, la conjugaison des mouvements descendant et ascendant des attelages 60 et 50 procurera une étanchéité quasi-simultanée des deux côtés du plateau tournant 1 au droit du logement 6.

On a montré en 73 sur la figure 3 un pion de verrouillage du plateau mobile 1, lequel pion est solidaire de la traverse inférieure 40 et peut pénétrer dans un

0102433

-12-

logement 6a adjacent au logement 6 contenant un échantillon prêt au dosage.

La traverse inférieure 43 porte une butée de joint 74 percée d'un trou 75 à l'aplomb d'un trou correspondant 76 percé dans ladite traverse et permettant l'évacuation des tubes 6 après passage dans la cellule de mesure.

Comme on le voit sur les figures 1et 3, le plateau tournant 1 est muni d'un rail circulaire 77 disposé dans la rainure annulaire 13 ménagé à la partie inférieure 1b dudit plateau. Ce rail 77 est sans contact avec le plateau 1 et est prévu entre l'ensemble distributeur 8 de récipients 7 et l'amont immédiat de la portion torique de joint 41, de façon à assurer la retenue des récipients ou tubes 7 à l'intérieur des logements 6.

On ajoutera encore ici que l'ensemble distributeur 8 de récipients 7 est relié en amont à un système d'alimentationnon représenté qui amène un par un les récipients, lesquels sont évidemment transparents et présentent avantageusement la forme de petits tubes à essai qui sont présentés ouverture vers le haut. Il est bien entendu que l'ensemble distributeur peut être réalisé par tous moyens appropriés.

On décrira maintenant le fonctionnement du dispositif de l'invention à la lumière de la description qui a été faite précédemment.

La plateau 1 est entraîné en rotation suivant le sens de la flèche visible sur la figure 1 par tout moyen approprié, tel que par exemple un moteur électrique et un embrayage non représentés.

Lorsque les joints 25, 37 et 41 sont au repos, comme on le voit sur la figure 3, l'embrayage entraîne le moteur qui fait tourner en permanence le plateau.

Lorsque le plateau est arrivé en position convenable d'arrêt, c'est-à-dire lorsqu'un logement 6 se trouve en position d'alignement coaxial avec l'aiguille 21 et par conséquent avec le photomultiplicateur 11, un détecteur (non représenté), commande le débrayage du plateau ce qui provoque son arrêt.

Le vérin 70 est immédiatement actionné, ce qui provoque le verrouillage du plateau 1 en position convenable par l'intermédiaire du pion 73 qui s'engage dans la partie supérieure d'un logement 6a. Ce faisant, le vérin 70 provoque un déplacement double et inversé des attelages 60 et 50, comme expliqué précédemment, de sorte que la bague d'appui 39 presse le joint 37 contre la surface supérieure 1a du plateau, et la traverse 43 presse la portion torique de joint 41 contre la forme demi-torique 13a de la rainure annulaire 13. En bref, le mouvement double des attelages 60 et 50 réalise l'étanchéité absolue à la lumière aux extrémités supérieure et inférieure du logement 6 contenant l'échantillon à doser.

Simultanément, le vérin 35 actionne les barres transversales 34 de façon à comprimer le joint plat 25 au moyen de la bague d'appui 33, ce qui réalise l'étanchéité à la lumière de la face latérale de la cellule de mesure.

Les conditions pour réaliser un dosage convenable de la luminescence sont ainsi réalisées, mais il est à noter ici que le dosage n'a lieu que dans la mesure où la cellule contient un tube 7 chargé d'échantillon à doser. Pour cela, l'ensemble d'injection 23 est actionné et il envoie par le tube 24 et l'aiguille 21 une dose précise de réactif dans le tube 7. Dès lors, la réaction bio-luminescente se développera au sein de l'échantillon contenu dans le tube 7, et la lumière émise par la réaction passe par la fenêtre tronconique 10 pour exciter la cathode 11a du photomultiplicateur 11 dont le signal sera amplifié et traité par un système électronique approprié non représenté.

Lorsque la mesure est réalisée, les vérins 70 et 35 sont actionnés en sens inverse pour libérer les joints 37,41 et 25 et également dégager le pion de verrouillage 73. L'embrayage est à nouveau excité et le plateau 1 se remet à tourner jusqu'à l'arrivée du logement 6 suivant en position convenable pour un nouvel arrêt. Du même coup, le logement 6a qui contenait le récipient 7 ayant fait l'objet d'une mesure s'arrête alors à l'aplomb des orifices 75 et 76, ce qui permet l'évacuation automatique par simple gravité du récipient 7 étant donné que le rail circulaire 77 est interrompu à ce niveau (figure 3).

On a donc réalisé suivant l'invention un dispositif entièrement automatisé permettant de réaliser des cellules de mesure totalement étanches à la lumière extérieure, cette réalisation des cellules se faisant de manière successive et de façon quasi-instantanée, puisque le transfert qui consiste à desserrer le système d'étanchéité, à passer au logement suivant et à serrer le système d'étanchéité, ne dure que quelques secondes. Dès lors on comprend que l'invention permet de réaliser des mesures successives à cadence élevée et avec la plus grande précision et fiabilité possible.

Bien entendu, l'invention n'est nullement limitée au mode de réalisation décrit et illustré qui n'a été donné qu'à titre d'exemple.

C'est ainsi qu'on pourrait parfaitement, sans sortir du cadre de l'invention, utiliser un nombre quelconque de vérins pour réaliser l'étanchéité conforme aux principes de l'invention, ou qu'on pourrait encore utiliser d'autres accessoires, tels que par exemples des obturateurs, placés devant la fenêtre du photomultiplicateur.

C'est dire que l'invention comprend tous les équivalents techniques des moyens décrits ainsi que leurs combinaisons, si celles-ci sont exécutées suivant son esprit et mises en œuvre dans le cadre de la protection comme revendiquée.

Revendications

1. Dispositif séquentiel automatique de dosage d'échantillons successifs dans lesquels on provoque une réaction de luminescence à l'aide d'un réactif approprié et qui sont disposés dans des logements ménagés au voisinage de la périphérie d'un plateau tournant auquel est associé au moins un système de mesure de la luminescence disposé latéralement en regard de la périphérie de ce plateau, caractérisé par des moyens déplaçables, de préférence simultanément, assurant l'étanchéité à la lumière et prévus tant entre le système de mesure (4) et la périphérie (5) du plateau (1) que sur la partie supérieure (1a) et inférieure (1b) du plateau au droit du logement (6) contenant l'échantillon à doser.

2. Dispositif selon la revendication 1, caractérisé en ce que les moyens déplaçables d'étanchéité précités sont constitués par un premier joint (25) entre système de mesure (4) et périphérie (5) du plateau (1), actionnable par une bague (33) extérieurement concentrique audit système de mesure, par un deuxième joint (37) actionnable par une autre bague (39) extérieurement concentrique au système d'injection (14) de réactif disposé au-dessus de la partie supérieure (1a) du plateau (1), et par un troisième joint (41) solidaire d'un berceau ou analogue (42) actionnable verticalement en dessous de la partie inférieure (1b) dudit plateau.

3. Dispositif selon la revendication 1 ou 2 caractérisé en ce que la bague (33) actionnant le premier joint (25) précité est commandée par des barres ou analogues (34) elles-mêmes commandées par vérin (35) et montées pivotantes sur ladite bague (33) et le bâti (9), tandis que l'autre bague (39) et le berceau (42) actionnant respectivement les deuxième (37) et troisième (41) joints précités sont respectivement solidaires de traverses (40, 43) disposées au-dessus et au-dessous du plateau (1).

4. Dispositif selon la revendication 3 caractérisé en ce que les deux traverses précitées (40, 43) appartiennent à un équipage de deux jeux (60, 50) de traverses relativement mobiles actionnées par un seul et même vérin (70).

5. Dispositif selon la revendication 3 ou 4, caractérisé en ce que les deux jeux de traverses sont chacun montés coulissants sur le bâti (9, 15) par l'intermédiaire d'entretoises (53, 63), le corps (71) du vérin (70) cité en dernier lieu étant solidaire de l'un (50) des jeux de traverses, et la tige (72) dudit vérin solidaire de l'autre (60) jeu de traverses.

6. Dispositif selon l'une des revendications 2 à 5, caractérisé en ce que l'un (50) des jeux de traverses, à savoir celui actionnant le troisième joint précité (41), est sollicité vers le bas au moyen de ressorts (54), tandis que l'autre jeu (60) de traverses (40, 62) qui commande le deuxième joint précité (37) est sollicité vers le haut au moyen de ressorts (66).

7. Dispositif selon l'une des revendications précédentes, caractérisé en ce que les premier (25) et deuxième (37) joints précités sont constitués par des joints plats, le premier joint plat étant solidaire de l'extrémité d'un fourreau ou analogue (27) contenant un photomultiplicateur (11) et le deuxième joint plat étant solidaire de l'extrémité (38) du système d'injection (14) de réactif, tandis que le troisième joint (41) précité est constitué par une portion de joint torique pénétrant dans une rainure annulaire (13) ménagée dans la partie inférieure (1b) du plateau tournant et débouchant dans les logements précités (6) pour l'échantillon.

8. Dispositif selon l'une des revendications précédentes, caractérisé en ce que la traverse (40) actionnant la bague (39) qui commande le deuxième joint (37) est munie d'un pion (73) de verrouillage du plateau (1), tandis que la traverse (43) actionnant le troisième joint (41) est pourvue d'un orifice (76) d'évacuation des échantillons après dosage.

9. Dispositif selon l'une des revendications précédentes, caractérisé en ce que le plateau tournant précité est muni d'un rail circulaire (77) de retenue des échantillons, disposé dans la rainure annulaire précité (13) ménagée dans la partie inférieure (1b) dudit plateau.

10. Dispositif selon l'une des revendications précédentes, caractérisé en ce que notamment un ensemble (8) de distribution de petits récipients tubulaires (7) destinés à contenir l'échantillon à doser, ainsi que des moyens (23) d'alimentation en réactif raccordés au système d'injection précité (14), sont fixés au bâti (9) de l'appareillage.

_Fig.1_

0102433

Fig.2

**Fig.3**

# RAPPORT DE RECHERCHE EUROPEENNE

**0102433**
Numéro de la demande

Office européen des brevets

EP 82 40 1629

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 756 920 (B.N. KELBAUGH et al.)<br>* Revendications 1,2,4; figures 1, 2 * | 1,9,10 | G 01 N 21/76 |
| A | EP-A-0 025 350 (DYNATECH AG)<br>* Revendication 1; résumé; figures 1, 2 * | 1 | |
| A | WO-A-8 000 100 (UNIVERSITY OF BIRMINGHAM)<br>* Revendications 1,6,7; résumé; figures 1, 2 * | 1 | |
| A | GB-A-2 056 670 (S. KOLEHMAINEN et al.)<br>* Page 2, lignes 10-34, 68-74; figures 1,3 * | 1 | DOMAINES TECHNIQUES RECHERCHES (Int. Cl. ³) |
| A | US-A-4 099 920 (L.R. HEISS)<br>* Revendications 1,3; résumé; colonne 2, ligne 66 - colonne 3, ligne 23; figures 3, 5 * | 1 | G 01 N 1/00<br>G 01 N 21/00<br>G 01 N 35/00<br>G 01 T 7/08 |
| A | US-A-3 520 660 (J.E. WEBB)<br>* Revendications 1, 7; figure 1 * | 1 | |
| A | US-A-3 663 816 (W.O. SCHERZER et al.)<br>* Revendication 1; résumé; figures 1, 2 * | 1 | |
| | ---      -/- | | |

Le présent rapport de recherche a été établi pour toutes les revendications

| Lieu de la recherche | Date d'achèvement de la recherche | Examinateur |
|---|---|---|
| BERLIN | 18-04-1983 | HOFMANN D G |

OEB Form 1503 03 82

# RAPPORT DE RECHERCHE EUROPEENNE

Office européen
des brevets

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 626 190  (R.E. CANNON)<br>* Revendication  1; résumé; figures 1, 2 * | 1 | |
| A | US-A-3 628 682  (G.L. PAULSON)<br>* Revendication  1; résumé; figures 1-4 * | 1 | |
| E | FR-A-2 503 370  (GROUPEMENT POUR LA VALORISATION DES PRODUITS NATURELS)<br>* En entier * | 1-10 | |
| | | | DOMAINES TECHNIQUES RECHERCHES (Int. Cl. ³) |

Le present rapport de recherche a été établi pour toutes les revendications

| Lieu de la recherche<br>BERLIN | Date d'achèvement de la recherche<br>18-04-1983 | Examinateur<br>HOFMANN D G |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82